# EUROPEAN PATENT SPECIFICATION

(11) **EP 0 642 962 B1**
(45) Date of publication and mention of the grant of the patent: **03.01.2001**
(21) Application number: 94306585.4
(22) Date of filing: 07.09.1994
(51) Int. Cl.: B60T 13/26, B60T 17/18

(54) **Valve for vehicle braking system**
Ventil für eine Fahrzeugbremsanlage
Valve pour système de freinage de véhicules

(30) Priority: 14.09.1993 GB 9319012
(43) Date of publication of application: 15.03.1995
(73) Proprietor: WABCO AUTOMOTIVE U.K. LIMITED, Morley, Leeds, LS27 0HQ (GB)
(72) Inventor: Baines, Robert George, Selby, YO8 8LR (GB); Keegan, Colm Michael Patrick, Nettleham, Lincoln, LN2 2PN (GB)
(74) Representative: Chettle, Adrian John

(56) References cited:
- DE-C- 4 109 741
- FR-A- 2 332 894

## Description

This invention relates to a valve for a vehicle braking system, and particularly to a safety valve of an air braking system for commercial vehicles.

Wheel brakes of early motor vehicles were actuated mechanically, by rods or cables. Fluid actuation, which relies on driver or vehicle generated fluid pressure, has been used since the 1930's and hydraulic actuation is the preferred actuation method for light vehicles.

Larger vehicles, such as lorries and buses, use air actuation and a different kind of brake in which the wheel brakes can be applied by a pre-loaded coil spring. An engine driven pump provides air under pressure to separate handbrake and service brake actuation circuits under the control of respective driver-operated hand and foot valves. Typically the driver's hand valve is used to admit air under pressure to an actuator which opposes the actuation force of the pre-loaded spring, thereby releasing the wheel brake and permitting the wheel to roll. The foot valve causes operation of the service brake by supplying air under pressure to a service brake actuator.

This kind of brake actuation is rather complex but has the advantage that failure of the handbrake actuation circuit causes immediate application of the wheel brake by the pre-loaded coil spring. Furthermore the handbrake actuation circuit may be used as an emergency brake in the event of failure of the service brake actuation circuit.

The vehicle air pump usually supplies a number of fluid circuits; for example a vehicle may have two service brake (footbrake) circuits, a handbrake/trailer brake circuit, and an auxiliaries circuit for e.g. a clutch servo. A reservoir is usually provided to give sufficient reserve to ensure that the vehicle can be halted in the event of engine failure or air pump failure. Valve means are usually provided to ensure that a leak in one circuit will not result in loss of pressure in all circuits. Such protection valves may be quite complex in order that the air pump is prevented from continuing to supply air under pressure to a failed circuit. Typically a valve may include an element movable to open flow from the source to the user, the valve element being subject to a spring closing force which is opposed by inlet pressure acting against a large area and outlet pressure acting against a smaller area. The effect of such a valve is that if outlet pressure is negligible (indicating a circuit failure) the spring partially or completely closes the valve since inlet pressure alone is insufficient to move the valve element to its fully open condition.

Another difficulty arises where a number of similar protection valves are provided for several fluid circuits and there is a danger that production tolerances will result in the valves having different opening pressures. In such circumstances a failure of the circuit having the lowest valve opening pressure may deprive all circuits of pressure since the full pump output may exhaust through the failed circuit. A solution to this problem is to make the valve elements flow sensitive such that a relatively large flow past any element will result in a build up of pressure upstream thereof to a point where the valve elements of other protection valves will open.

The use of multiple circuits is desirable but leads to a potential problem where air pressure in the fluid circuits and reservoir leaks away whilst the vehicle is stopped, for example overnight. In a vehicle braking system circumstances may occur where air pressure in the service brake circuits and reservoir leaks away whilst residual air pressure in the handbrake circuit remains at a sufficiently high level to permit release of the handbrake. It may thus be possible for a vehicle to be driven away before the engine air pump has had time to bring air pressure up to a level which permits effective service brake operation.

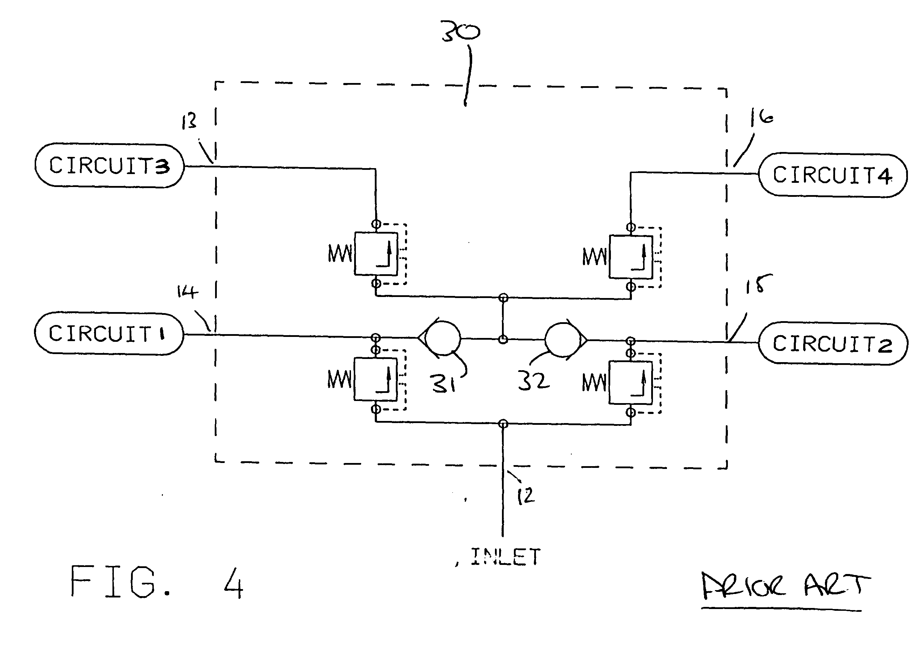

One solution to this problem is to minimize the volume of pressurised air between the protection valve and the hand valve, but this is often impractical and in any event only possible for so called 'series' valves of the kind shown in Fig. 4 of this specification.

DE-C-4109741 discloses a protection valve for the fluid circuits of a motor vehicle, the protection valve having a control valve between priority and non-priority circuits. The control valve is open only if the priority circuits are satisfied. One embodiment includes a bleed back from a non-priority to a priority circuit, to ensure rapid loss of pressure in the non-priority circuit.

What is required is a means of ensuring that sufficient pressure to obtain service braking is always available before the handbrake can be released.

According to the present invention there is provided a protection valve for fluid brake circuits of a vehicle, the valve having an inlet for connection to a source of fluid under pressure, a first outlet for connection to a control valve of a handbrake circuit, a second outlet for connection to a control valve of a service brake circuit, isolating valve means to permit fluid flow from said inlet to respective outlets, said first and second outlets being connected downstream of said isolating valve means, by a single bleed conduit having a restrictor and a non-return valve in series, the bleed conduit permitting flow from the first outlet to the second outlet only, characterised in that the restrictor is sized to permit excess pressure to bleed from said first outlet to said second outlet whilst allowing pressure at said first outlet to reach a predetermined minimum which will allow operation of the vehicle handbrake in use.

Such a valve overcomes the aforementioned difficulties by ensuring that a small flow can take place from the handbrake circuit to the service brake circuit in the event that residual pressure in the service brake circuit drops below that in the handbrake circuit. The source of fluid under pressure is selected to have an output which will satisfy the demand at the first outlet notwithstanding a continuous bleed through the restrictor at the maximum pressure drop. The size of the restrictor is chosen to ensure that residual pressure in the handbrake circuit is permitted to drain down over a significant period, for example 2-3 hours or overnight, but the restrictor is not so large that it will prevent pressurisation of the handbrake circuit to permit emergency movement of the vehicle under control of the handbrake. Failure of the service brake circuit is of course indicated to the vehicle driver by means such as a warning buzzer and warning light. The non-return valve ensures that flow cannot take place in the opposite direction.

The restrictor thus ensures that failure of the second circuit will not result in total loss of pressure in the first circuit by virtue of fluid flow through said fluid conduit provided that the source of pressurized air is sufficient to sustain the working (first) circuit and the loss through said restrictor.

It follows that in the event that fluid pressure in the service brake circuit is lost overnight, residual pressure in the handbrake circuit cannot exceed that in the service brake circuit, and in the case where sufficient residual pressure to release the handbrake remains, the same pressure will be available in the associated service brake circuit.

Normal operation of the fluid circuits is unaffected since the service brake circuit is isolated by the non-return valve.

If the residual pressure in the circuits drops below a level sufficient to release the handbrake, a source of fluid under pressure must be provided at said inlet; for example the vehicle engine may need to be started in order that an air pump can charge the reservoir of an air brake actuation system of a commercial vehicle.

The protection valve may include a third outlet for connection to a second service brake circuit and supplied via isolating valve means. In the case where for safety reasons the vehicle is provided with two service brake circuits, the first and third outlets may be connected by a single bleed conduit downstream of said isolating valve means, the bleed conduit also having a restrictor and non-return valve in series permitting flow from the first outlet to the third outlet only, and having a restrictor sized to permit excess pressure to bleed from said first outlet to said third outlet whilst allowing pressure at said first outlet to reach a predetermined minimum which will allow operation of the vehicle handbrake in use.

Once again, the source of fluid pressure is selected to have an output which will satisfy the demand of the first outlet notwithstanding a continuous bleed through the restrictors to the second and third outlets at the maximum pressure drop.

Such an arrangement provides an improved level of service braking in the event of low residual pressure in either or both service brake circuits.

In the event that residual pressure in the service brake circuit(s) is high whereas residual pressure in the handbrake circuit is low, the driver will be unable to release the handbrake until fluid under pressure is provided at the inlet, for example by charging the system from an engine driven pump.

A bleed conduit having a restrictor and non return valve in series may also be provided between an auxiliaries outlet of the protection valve and a service brake circuit. The restrictor should be sized to permit excess pressure to bleed from the auxiliaries circuit whilst permitting operation thereof during normal conditions of use. Such an arrangement ensures that inadvertent connection of the handbrake circuit (circuit 3) to the auxiliaries outlet (circuit 4) will not negate the protection provided by the present invention.

Other features of the invention will be apparent from the following description of several preferred embodiments shown by way of example only in the accompanying drawings in which:-
Fig. 1 is a schematic diagram of first prior art protection valve;
Fig. 2 shows the valve of Fig. 1 incorporating a first embodiment of the invention;
Fig. 3 shows the valve of Fig. 1 incorporating a second embodiment of the invention;
Fig. 4 is a schematic diagram of a second prior art protection valve;
Fig. 5 shows the valve of Fig. 4 incorporating the first embodiment of the invention; and
Fig. 6 shows the valve of Fig. 4 incorporating the second embodiment of the invention.

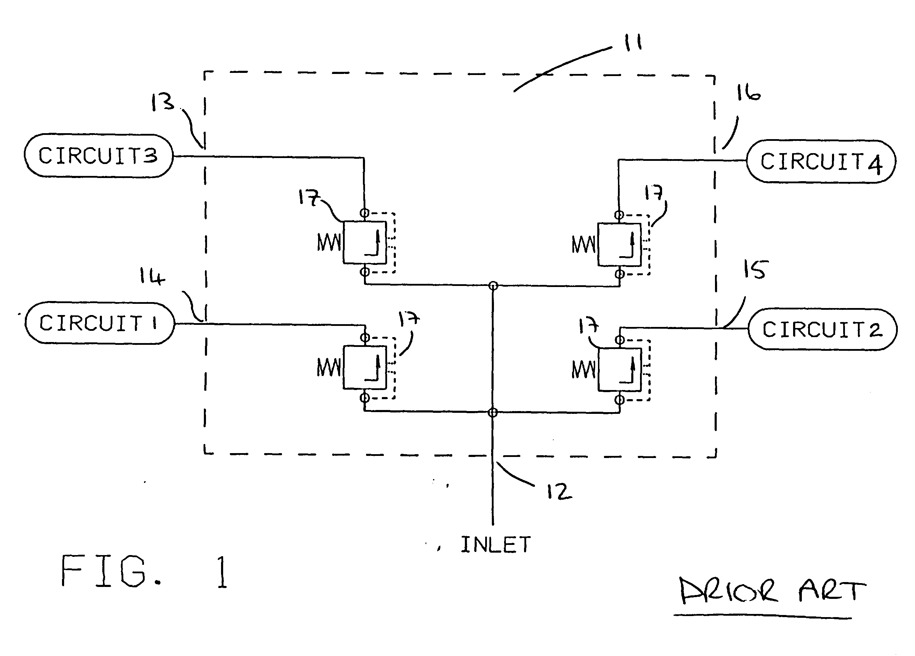

With reference to the drawings Fig. 1 shows a protection valve 11 having an inlet port 12 for connection to a source of fluid pressure such as the air pump/reservoir of a commercial vehicle. The valve 11 has four outlet ports 13-16 respectively connected to a handbrake actuation circuit (circuit 2), two service brake actuation circuits (circuits 1 and 2), and an auxiliaries circuit (circuit 4). The inlet port 12 is connected to each outlet port through respective isolating valves 17 which close in the event of a loss of pressure in an associated circuit; the isolating valves 17 ensure that loss of pressure in one circuit does not result in loss of pressure in all circuits.

The isolating valves 17 may be of any suitable kind and are well known in automotive braking system.

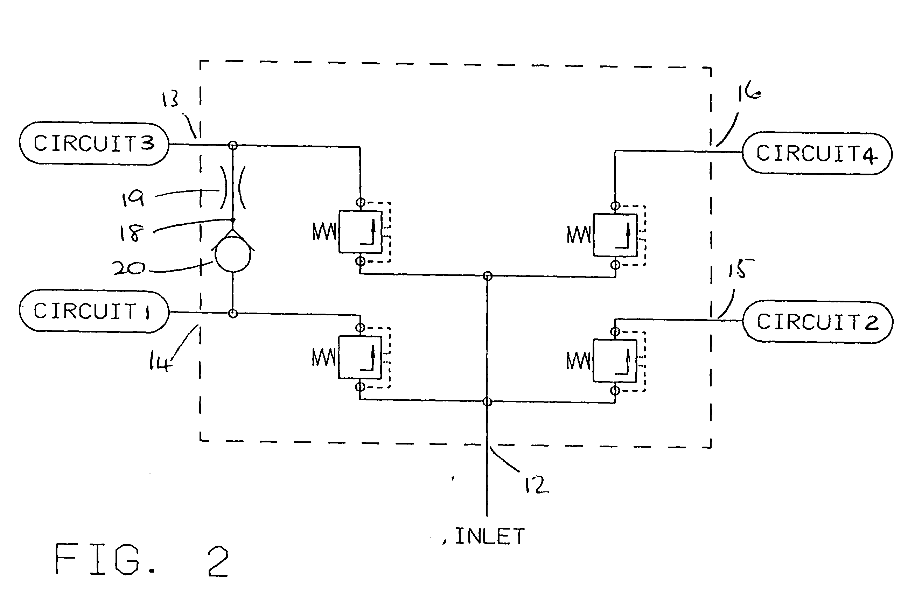

Fig. 2 illustrates the circuit of Fig. 1 when modified to include a first embodiment of the present invention. A single bleed conduit 18 links the handbrake circuit (circuit 3) and one of the service brake circuits (circuit 1), and includes a restrictor 19 upstream of a non-return valve 20 which permits flow only from the handbrake circuit to the service brake circuit.

The non-return valve 20 is in the 'normally closed' position to ensure that no higher pressure can exist in the handbrake circuit than in the service brake circuit. Valve 20 allows pressure to equalize by slow leakage through restrictor 19, but rapid increases of pressure, for example during system pump-up, are not affected. Accordingly loss of residual service brake pressure in circuit 1 will lead to a corresponding slow loss of pressure in the handbrake circuit whilst the fluid pressure source is not operative, for example when the vehicle engine is stopped; release of the handbrake is thus prevented when the service brakes actuated by circuit 1 are inoperable. In the preferred embodiment it is assumed that the pressure to release the handbrake and to apply the service brake effectively are the same - in the event that different pressures are utilized in each circuit appropriate valve means will be required to ensure that release of the handbrake is prevented if service brake pressure is not adequate.

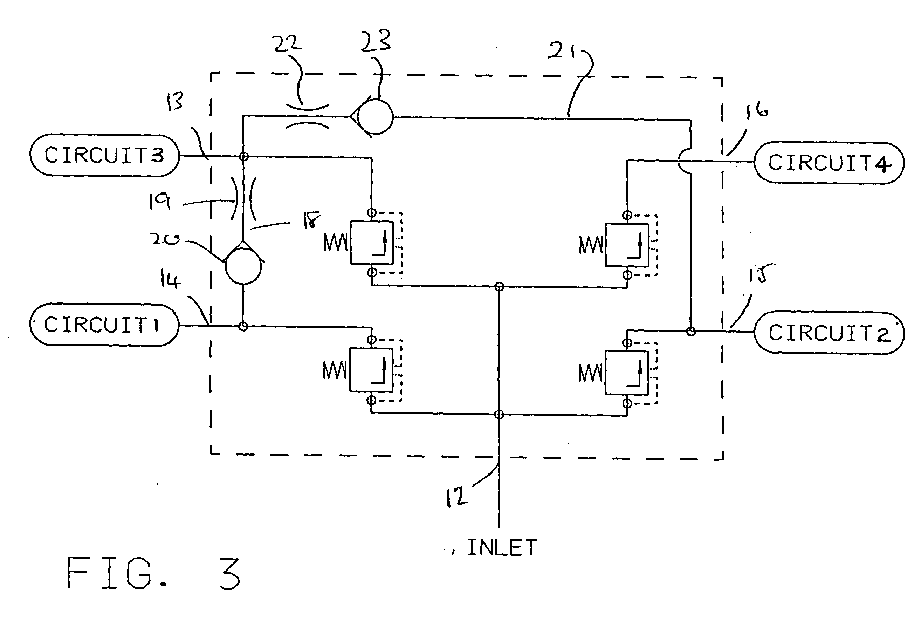

Fig. 3 illustrates an alternative arrangement in which a second conduit is provided between the handbrake circuit and the second service brake circuit (circuit 2). The second conduit 21 is similar to conduit 18 and includes a restrictor 22 and non-return valve 23. In this arrangement residual pressure in the handbrake circuit will reduce to the lowest of the residual pressures in the service brake circuits, thus ensuring an improved average level of service braking at handbrake release pressure when considering the variety of leakdown possibilities.

The conduits linking the handbrake and service brake circuits may have a common first portion and restrictor, thereafter splitting to separate non-return valves.

Fig. 4 illustrates an alternative prior method of supplying fluid under pressure to the four consumer circuits. In this case the protection valve 30 supplies service brake circuits 1 and 2 which are in series with the handbrake and auxiliaries circuits 3 and 4. The layout ensures that at least one of the service brake circuits 1 and 2 has sufficient pressure to actuate the service brakes before pressure is available to release the handbrake of circuit 3.

This arrangement suffers from the same disadvantage as the circuit of Fig. 1, in that residual pressure in the handbrake circuit (circuit 3) may be sufficient to release the handbrake whereas pressure in the service brake circuits (circuits 1 and 2) may leakdown to zero over a period of time.

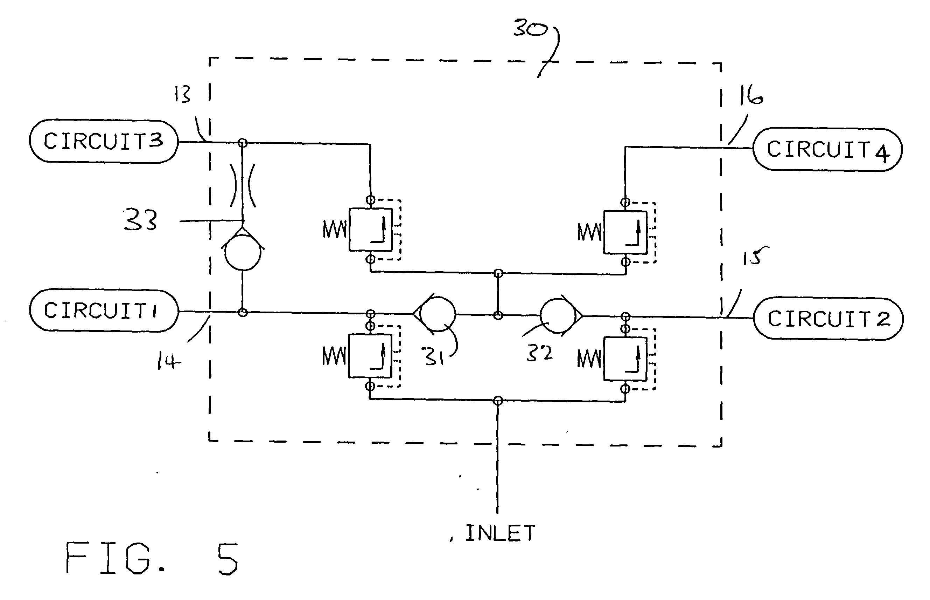

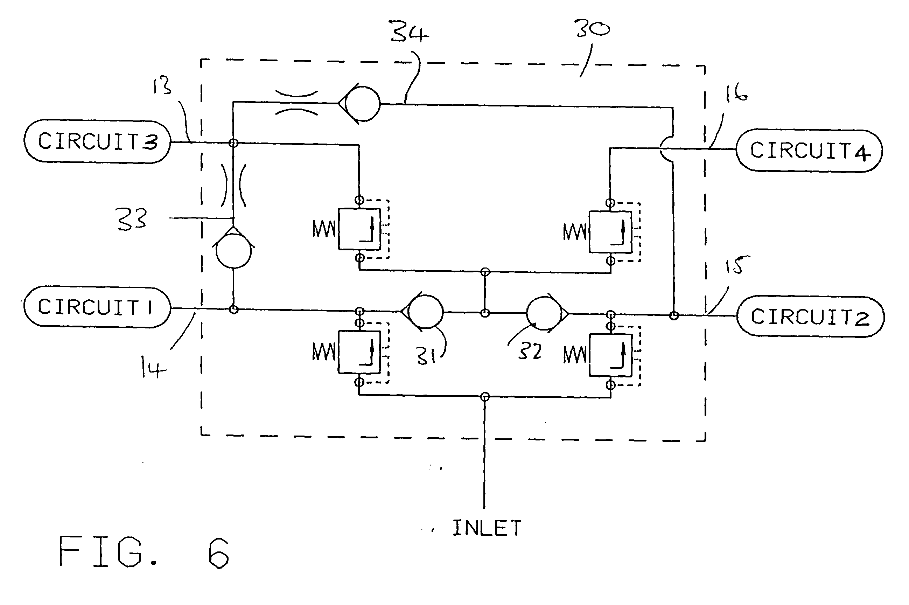

Figs. 5 and 6 illustrate the valve of Fig. 4 incorporating the fluid conduit, restrictor and non-return valve of the present invention. Fig. 5 illustrates connection 33 to a single service brake circuit whereas Fig. 6 illustrates connections 33,34 to both service brake circuits.

In a further embodiment (not illustrated) the auxiliaries circuit (circuit 4) is also provided with a bleed conduit connected to one or both service brake circuits. The bleed conduit acts in the manner previously described and negates the effect of inadvertent wrong connection of the handbrake circuit to the auxiliaries outlet of the valve.

Although the invention has been described with reference to braking system having dual service brake circuits it will be apparent that the invention will work equally well with a single circuit, or with more than two service brake circuits.

## Claims

1. A protection valve for fluid brake circuits of vehicles, the valve having an inlet (12) for connection to a source of fluid under pressure, a first outlet (13) for connection to a control valve of a handbrake circuit, a second outlet (14) for connection to a control valve of a service brake circuit, isolating valve means (17) to permit fluid flow from said inlet to respective outlets, said first and second outlets (13,14) being connected downstream of said isolating valve means (17), by a single bleed conduit (18) having a restrictor (19) and a non-return valve (20) in series, the bleed conduit (18) permitting flow from the first outlet (13) to the second outlet (14) only, characterised in that the restrictor (19) is sized to permit excess pressure to bleed from said first outlet (13) to said second outlet (14) whilst allowing pressure at said first outlet (13) to reach a predetermined minimum which will allow operation of the vehicle handbrake in use.

2. A protection valve according to claim 1 and including a third outlet (15) for connection to a second service brake circuit and supplied via isolating valve means.

3. A protection valve according to claim 2 wherein said first and third outlets (14,15) are connected by a single bleed conduit (21) downstream of said isolating valve means, the bleed conduit (21) having a restrictor (22) and non-return valve (23) in series and permitting flow from the first outlet (13) to the third outlet (15) only, and the restrictor (22) being of a size to permit excess pressure to bleed from said first outlet (13) to said third outlet (15) whilst allowing pressure at said first outlet (13) to reach a predetermined minimum which will allow operation of the vehicle handbrake in use.

4. A protection valve according to any preceding claim and having an auxiliaries outlet (16) for connection to auxiliaries, said auxiliaries and second outlets (16,14) being connected downstream of said isolating valve means (17), by a single bleed conduit having a restrictor and a non-return valve in series, the bleed conduit permitting flow from the auxiliaries outlet (16) to the second outlet (14) only, and the restrictor being of a size to permit excess pressure to bleed from said auxiliaries outlet to said second outlet whilst allowing pressure at said auxiliaries outlet to reach a predetermined minimum which will allow operation of auxiliaries in use.

## Patentansprüche

1. Schutzventil für Flüssigkeitsbremskreise von Fahrzeugen, wobei das Ventil einen Einlaßkanal (12) zur Verbindung mit einer Quelle von unter Druck stehender Flüssigkeit, einen ersten Auslaßkanal (13) zur Verbindung mit einem Steuerventil eines Handbremskreises, einen zweiten Auslaßkanal (14) zur Verbindung mit einem Steuerventil eines Betriebsbremskreises, eine Isolierventileinrichtung (17) zum Ermöglichen eines Flüssigkeitsflusses von dem Einlaßkanal zu jeweiligen Auslaßkanälen, wobei der erste und der zweite Auslaßkanal (13, 14) stromabwärts der Isolierventileinrichtung (17) verbunden ist, durch ein einzelnes Entlüftungsrohr (18) mit einem Reduziereinsatz (19) und einem Rückschlagventil (20) in Reihe, aufweist, wobei das Entlüftungsrohr (18) einen Fluß lediglich von dem ersten Auslaßkanal (13) zu dem zweiten Auslaßkanal (14) ermöglicht, dadurch gekennzeichnet, daß der Reduziereinsatz (19) derart bemessen ist, daß ermöglicht wird, daß ein Überdruck von dem ersten Auslaßkanal (13) zu dem zweiten Auslaßkanal (14) abgelassen wird, so daß ein vorbestimmtes Minimum erreicht wird, welches eine Betätigung der verwendeten Fahrzeughandbremse ermöglicht.

2. Schutzventil nach Anspruch 1, umfassend einen dritten Auslaßkanal (15) zur Verbindung mit einem zweiten Betriebsbremskreis, wobei eine Versorgung davon über eine Isolierventileinrichtung erfolgt.

3. Schutzventil nach Anspruch 2, wobei der erste und der dritte Auslaßkanal (14, 15) durch ein einzelnes Entlüftungsrohr (21) stromabwärts der Isolierventileinrichtung verbunden sind, wobei das Entlüftungsrohr (21) einen Reduziereinsatz (22) und ein Rückschlagventil (23) in Reihe aufweist und einen Fluß lediglich von dem ersten Auslaßkanal (13) zu dem dritten Auslaßkanal (15) ermöglicht, wobei der Reduziereinsatz (22) eine derartige Größe aufweist, daß ermöglicht wird, daß ein Überdruck von dem ersten Auslaßkanal (13) zu dem dritten Auslaßkanal (15) abgelassen wird, während ermöglicht wird, daß ein Druck an dem ersten Auslaßkanal (13) ein vorbestimmtes Minimum erreicht, welches einen Betrieb der verwendeten Fahrzeughandbremse ermöglicht.

4. Schutzventil nach einem der vorhergehenden Ansprüche, umfassend einen Nebenverbraucherauslaßkanal (16) zur Verbindung mit Nebenverbrauchern, wobei die Nebenverbraucher und zweiten Auslaßkanäle (16, 14) stromabwärts der Isolierventileinrichtung (17) verbunden sind, durch ein einzelnes Entlüftungsrohr mit einem Reduziereinsatz und einem Rückschlagventil in Reihe, wobei das Entlüftungsrohr lediglich einen Fluß von dem Nebenverbraucherauslaßkanal (16) zu dem zweiten Auslaßkanal (14) ermöglicht, und wobei der Reduziereinsatz eine derartige Größe aufweist, daß ermöglicht wird, daß Überdruck von dem Nebenverbraucherauslaßkanal zu dem zweiten Auslaßkanal abgelassen wird, während ermöglicht wird, daß Druck an dem Nebenverbraucherauslaßkanal ein vorbestimmtes Minimum erreicht, welches einen Betrieb von verwendeten Nebenverbrauchern ermöglicht.

## Revendications

1. Valve de protection pour circuits de frein hydraulique de véhicules, la valve comportant :
. un orifice d'entrée (12) destiné à être relié à une source de fluide sous pression,
. un premier orifice de sortie (13) destiné à être relié à une valve de commande d'un circuit de frein à main,
. un second orifice de sortie (14) destiné à être relié à une valve de commande d'un circuit de frein de service,
. une vanne d'isolement (17) pour permettre l'écoulement du fluide de l'orifice d'entrée vers les orifices de sortie respectifs,
les premier et second orifices de sortie (13, 14) étant reliés en aval de la vanne d'isolement (17) par un circuit de purge (18) unique comportant un restricteur (19) et un clapet anti-retour (20) en série, le circuit de purge (18) ne permettant l'écoulement du fluide que du premier orifice de sortie (13) vers le second orifice de sortie (14), caractérisée en ce que le restricteur (19) est dimensionné pour permettre à l'excès de pression de se décharger par le premier orifice de sortie (13) vers le second orifice de sortie (14), tout en permettant à la pression au niveau du premier orifice de sortie (13) d'atteindre un minimum prédéterminé qui permettra le fonctionnement du frein à main du véhicule lors de son utilisation.

2. Valve de protection selon la revendication 1 caractérisée en ce qu'elle comporte un troisième orifice de sortie (15) destiné à être relié à un second circuit de frein de service et alimenté par une vanne d'isolement.

3. Valve de protection selon la revendication 2 caractérisée en ce que les premier et troisième orifices de sortie (13, 15) sont reliés par un unique conduit de purge (21) situé en aval de la vanne d'isolement, le conduit de purge (21) présentant un restricteur (22) et un clapet de non-retour (23) en série ne permettant l'écoulement que du premier orifice de sortie (13) vers le troisième orifice de sortie (15), le restricteur (22) étant dimensionné pour permettre à l'excès de pression de se décharger par l'orifice de sortie tout en permettant à l'excès de pression d'être déchargé du premier orifice de sortie (13) vers le troisième orifice de sortie (15) pour atteindre un minimum prédéterminé qui permettra le fonctionnement du frein à main du véhicule lors de l'utilisation.

4. Valve de protection selon l'une quelconque des revendications précédentes et comportant un orifice de sortie auxiliaire (16) destiné à être relié à des auxiliaires, cet orifice de sortie auxiliaire et ce second orifice de sortie (16, 14) étant reliés en aval du robinet d'arrêt ou de retenue (17) par un circuit de purge unique comportant un restricteur et une valve anti-retour en série, le circuit de purge permettant l'écoulement du fluide de l'orifice de sortie auxiliaire (15) vers le second orifice de sortie (14) uniquement, le restricteur étant dimensionné pour permettre à l'excès de pression de se décharger de l'orifice de sortie auxiliaire vers le second orifice de sortie, tout en permettant à la pression au niveau de cet orifice de sortie auxiliaire d'atteindre un minimum prédéterminé qui permettra le fonctionnement des auxiliaires lors de leur utilisation.
